(19) Europäisches Patentamt
European Patent Office
Office européen des brevets

(11) **EP 2 855 076 B1**

(12) **EUROPEAN PATENT SPECIFICATION**

(45) Date of publication and mention
of the grant of the patent:
**18.03.2020 Bulletin 2020/12**

(21) Application number: **13837131.5**

(22) Date of filing: **29.05.2013**

(51) Int Cl.:
*B23K 26/06* (2014.01)     *G02B 27/16* (2006.01)
*H01S 3/10* (2006.01)      *G02B 26/10* (2006.01)
*G02B 27/09* (2006.01)     *H01S 3/00* (2006.01)

(86) International application number:
**PCT/US2013/043045**

(87) International publication number:
**WO 2014/042712 (20.03.2014 Gazette 2014/12)**

(54) **OPTICAL SYSTEM FOR FORMING NON-CIRCULAR IMAGE OF LIKEWISE-SHAPED LIGHT SOURCE ON WORKPIECE LOCATED IN WAIST OF LASER BEAM**

OPTISCHES SYSTEM ZUR ERZEUGUNG EINES UNRUNDEN BILDES EINER EBENSO GEFORMTEN LICHTQUELLE AUF EINEM WERKSTÜCK IM MITTELTEIL EINES LASERSTRAHLS

SYSTÈME OPTIQUE PERMETTANT DE FORMER UNE IMAGE NON CIRCULAIRE D'UNE SOURCE DE LUMIÈRE AYANT LA MÊME FORME SUR UNE PIÈCE SITUÉE DANS LE RÉTRÉCISSEMENT D'UN FAISCEAU LASER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2012 US 201261653116 P**

(43) Date of publication of application:
**08.04.2015 Bulletin 2015/15**

(73) Proprietor: **IPG Photonics Corporation Oxford, Massachusetts 01540 (US)**

(72) Inventor: **ERBATOV, Timur Oxford, MA 01540 (US)**

(74) Representative: **Kohlmann, Kai Donatusstraße 1 52078 Aachen (DE)**

(56) References cited:
EP-A2- 0 536 951     WO-A2-2005/031415
JP-A- 2003 248 184   US-A1- 2002 138 119
US-A1- 2004 233 388  US-A1- 2006 098 934
US-A1- 2008 151 951  US-A1- 2011 249 319

**Description**

BACKGROUND OF THE DISCLOSURE

Field of the Disclosure

The disclosure relates to optical systems and more particular, the disclosure relates to a laser beam delivering system capable of transmitting a non-circular light beam emitted by a likewise shaped light source to the desired location and with the desired intensity.

Background of the disclosure

Up until recently the core geometry of fiber optics have almost exclusively been circular. With new geometrical possibilities differing from a circular design, current fiber optic cables are not only transporting the laser light to the work piece, but can also take an active part in the system design reducing the need for beam shaping optics. For example, a fiber core with a square cross-section delivering a square beam is attractive in various high power applications such as welding and heat treatment applications because it processes the material more uniformly as it moves laterally along the surface compared to a circular beam.

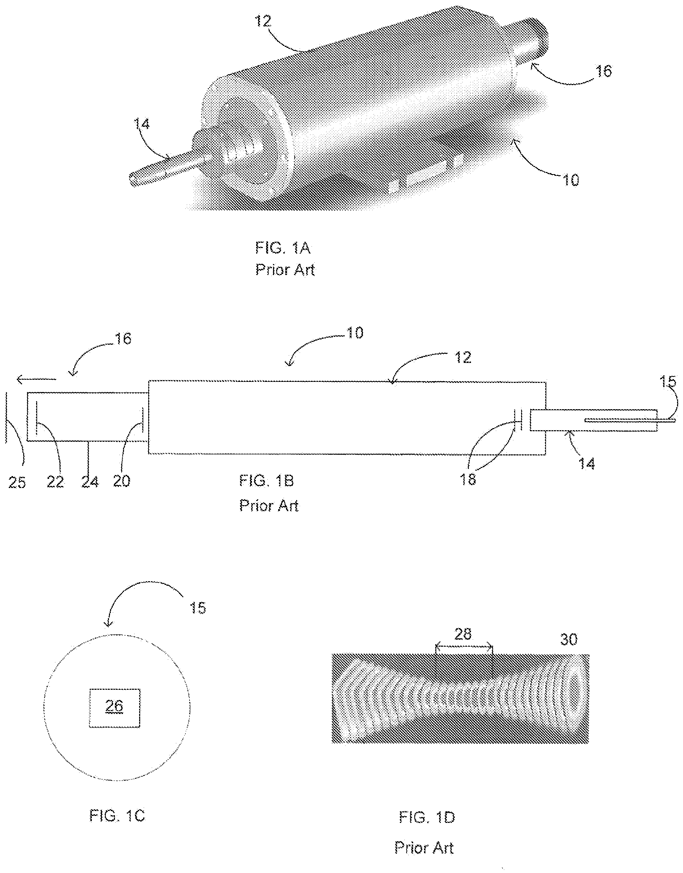

Referring to FIGs. 1A-1D, one of the known beam transmitting schemes includes a pigtailed optical isolator 10. Isolators are optical devices that allow light to be transmitted in one direction only. They are most often used to prevent back reflected light from entering the source. Particularly, but not exclusively, isolator 10 is particularly important when used in high power pulsed fiber laser systems with a master oscillator/power amplifier ("MOPA") configuration which is very sensitive to high power backreflected light.

Referring to FIG. 1B, isolator 10 includes a housing 12 provided with, among others, a fiber connector 14 at its upstream end and a telescope 16 at its downstream end. The connector 14 receives a delivery fiber 15 including a cladding, and a core 26, which can have any cross-section differing from a circular one, such as a square cross-section shown in FIG. 1C. The fiber 15 delivers amplified light to isolator 10 where the light is first collimated at the input of housing 12 by a lens assembly 18. The collimated beam then propagates in free space through the core of the isolator (not shown) and is eventually magnified by telescope 16 which includes a plano-concave negative lens 20 mounted close the output end of housing 12, and a plano-convex positive lens 22 mounted to the telescope's output end. Seemingly a square-shaped image of core 26 would appear on a workpiece placed in a focal plane of F-theta lens 24. However, it is not the case, as disclosed below.

FIG. 1D illustrates the circular image of core 26 on the workpiece located within a Rayleigh range ("RR") 28 and substantially coincides with a waist 30 of the output laser beam. The desired, square-shaped core image is formed in a plane spaced from waist 30 of the beam with the latter being the highest optical intensity region. Yet, as discussed above, both the square image and highest intensity of the beam incident on the workpiece, which is located in a focal plane, are often required for effectively performing the task at hand.

A need therefore exists for an imaging optical system delivering a laser beam with a non-circular cross-section fiber on the workpiece to be processed with the desired intensity.

Another need exists for an imaging optical system operative to invariably place the image of a non-circular fiber core within the RR of the emitted laser beam.

Another need exists for pigtailed bulk optics provided with an optical system which is operative to focus an image of the non-circular fiber core with the desired maximum intensity on a workpiece located within the RR of the laser beam.

These needs are met by this disclosure as briefly disclosed immediately below.

EP 0 536 951 A2 discloses an apparatus for delivering a defocused laser beam to a sharp-edged spot in a target plane; the beam has a low power density in a plane of interest between the delivery apparatus and the target plane. Where the target plane is the retina of a patient's eye, the defocused beam profile is controlled so that the beam has low power density at the eye's cornea. An input laser beam emerges from an optical fiber, and a first lens is mounted adjacent the optical fiber's output end to receive and transform the input beam. A second lens is mounted with variable position between the first lens and the treatment site, for magnifying the image of the fiber core. A lens system comprising a third and fourth lens having long focal length is mounted between the second lens and the target plane for relaying the magnified image of the fiber core to the target plane. By varying the position of the second lens and the relay lens system comprising third and fourth lenses, the characteristics of the beam delivered to the treatment site can be controlled.

US 2002/138119 A1 discloses an apparatus for delivering electromagnetic radiation onto tissue to be treated therewith, comprising a lightguide having a cross-section of a polygonal shape, said lightguide is arranged to receive the radiation to be delivered at an entrance-end thereof and having a length selected such that said received radiation emerges from an exit-face thereof having a substantially uniform intensity distribution at said exit-face and a plurality of optical components arranged to project an image of said exit-face of said lightguide onto the tissue to be treated such that the electromagnetic radiation is delivered to a location on said tissue in a treatment-spot having the polygonal shape of said lightguide cross-section, and a substantially uniform intensity of radiation therein. The optical elements comprise a square fiber, a collimating lens group and a F-theta lens.

## SUMMARY OF THE DISCLOSURE

According to one aspect, the disclosed optical system is configured with an image-forming optical system including a combination of five lenses. The lenses are selected so that the image of a light source, for example non-circular fiber core, with the desired spot size is formed in a focal plane, i.e. substantially coincides with a beam waist.

The lenses are spaced apart along a light path and have respective optical characteristics which allow first to place a non-circular image and waist in a focal plane of one of intermediary lenses, and then modify the spot size of the image to the desired one. The placement of the non-circular image in an intermediary waist is provided by a combination of three upstream lenses which sequentially transform a collimated beam, incident on the first upstream lens, so as to have the waist of the beam and non-circular image substantially coincide. However, the obtained initial image does not have the desired spot size.

To bring the initial spot size to the desired one, spaced fourth and fifth lenses are located along the path downstream from the third lens. The last, fifth downstream lens is an F-theta lens. These two lenses are configured to comply with the following equation:

$$A/B = F4/F5, \qquad (1)$$

wherein A and B are respective spot sizes of the initially received non-circular image and desired spot size, and F4 and F5 are respective focal lengths. The desired spot size of the image corresponds to the beam intensity sufficient to effectively treat a workpiece.

In accordance with a further aspect of the disclosure, a pigtailed optical component includes an image forming system configured to form the square-shaped image of the fiber's core at the desired location and with the desired intensity. The image forming system includes a combination of five spaced coaxial lenses. The two downstream lenses are configured to adjust a spot size of previously formed square-shaped image to the desired one at the desired location in accordance with equation (1).

## BRIEF DESCRIPTION OF THE DRAWINGS

The above and other aspects, features and advantages of the disclosure will become more readily apparent with the aid of the following drawings, in which:

FIG. 1A is a perspective view of isolator configured in accordance with the known art.
FIG. 1B is an elevated sectional view of the isolator of FIG. 1A.
FIG. 1C is an exemplary cross-section of delivery fiber having a core which is configured with a non-circular cross-section.
FIG. 1D is a computer generated image of a square fiber core used in the system shown in FIGS. 1A-1C.
FIG. 2 is an optical scheme configured in accordance with the disclosure.
FIG. 3 is a diagrammatic view of the disclosed scheme of FIG. 2.
FIG. 4 is an optical scheme of another embodiment illustrating the formation of images and beams by the disclosed system.
FIG. 5 is a perspective view of the system of FIG. 4.
FIG. 6 is table illustrating physical and optical parameters of the embodiment of FIG. 4.

## SPECIFIC DESCRIPTION

Reference will now be made in detail to embodiments of the invention. Wherever possible, same or similar reference numerals are used in the drawings and the description to refer to the same or like parts or steps. The drawings are in simplified form and are not to precise scale. For purposes of convenience and clarity only, directional (up/down, etc.) or motional (forward/back, etc.) terms may be used with respect to the drawings. The term "couple" and similar terms do not necessarily denote direct and immediate connections, but also include connections through intermediate elements or devices.

In free space between lenses, mirrors and/or other optical elements, the position of the beam waist and the waist diameter completely describe the beam. As a beam passes through a lens, mirror, or dielectric interface, the wavefront curvature is changed, resulting in new values of the waist position and waist diameter. This optical phenomenon makes the following description more clear.

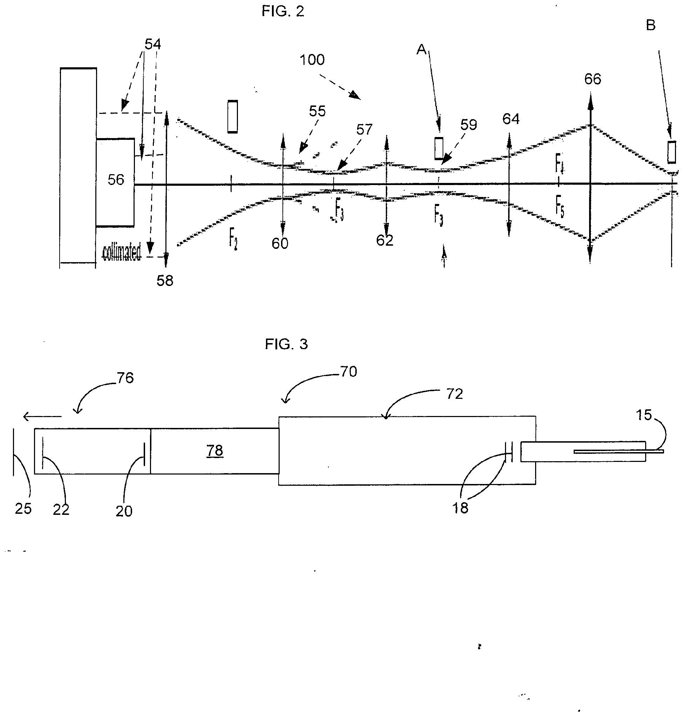

FIG. 2 illustrates the disclosed imaging system 100 configured to form the desired non-circular image of a non-circular light source with the desired intensity. For example, the light source may be an optical fiber with the core having any cross-section which differs from a circular one. The system 100 includes a plurality of spaced lenses configured to initially form the non-circular image in a beam waist formed between intermediary lenses and not having the desired spot size, and then adjust this size to the desired one which is formed in the focal plane of an F-theta lens.

The initial non-circular image having a spot size differing from the desired one B, is formed by a combination of three lenses 58, 60 and 62, respectively, which are sequentially spaced from one another along a light path. The diverging beam 54 emitted by a non-circular source is incident on an upstream first positive lens 58 that can be positioned immediately downstream from the output of an optical element or spaced therefrom at a distance of hundreds of millimeters. For positive lens 58, refraction of light brings the beam to a point A (real image) spaced upstream from a first beam waist 55. The intensity of the thus formed image is not acceptable for performing the task at hand.

To gradually form the desired, final non-circular image with the desired intensity, second positive lens 60 is placed in first beam waist 55 and configured so as to have its back focus coincide with the image A. Such a configuration, as known to one of ordinary skill in the art, forms the image of the source in the infinity.

The third lens 62 is configured with a back focus formed in the plane of second waist 57 of the beam incident on second lens 60. This configuration results in a third beam waist 59 of the beam, which is incident on third lens 62, substantially coinciding with the real preliminary non-circular image of the source in focal plane F3 of lens 62. The third lens 62 is however configured with a short focal length so that the preliminary image has the spot size A which is different from the desired size B. In other words, the light intensity of the beam spot in focal point F3 is different from the desired one.

The formation of the desired spot with size B requires a combination of two additional lenses 64 and 66, respectively, with the latter being an F-theta lens. The fourth lens 64 may be positioned anywhere in the beam downstream from the waist 59 provided that the following relationship is met:

$$A/B = F4/F5 \qquad (2)$$

where A and B are the spot sizes of the preliminary formed image and desired final image, respectively, and F4 and F5 are respective focal lengths, with F5 being fixed. The only variable to be determined here is F4. Accordingly,

$$F4 = F5 A/B \qquad (3)$$

FIG. 3 diagrammatically illustrates one possible application of system 100 of FIG. 2. In particular, an optical fiber 15 has a non-circular core delivering light to an optical isolator assembly 70. The isolator has a standard structure similar to that one of FIG. 1 and includes a housing 72, one or two collimating lenses which direct the beam to the isolator core and a telescope assembly 76 that includes two lenses adjusting the size of the beam. The adjusted beam is incident on a F-theta lens 66. The imaging system 100 of FIG. 2 is coupled to the output of telescope assembly 76 immediately upstream from F-theta lens 66. The illustrated structure is operative to form the desired final image of the non-circular fiber core at the desired location which may be spaced from the waist within a 1-10% of the entire length of a Rayleigh range ("RR"). The RR is the axial distance from the beam waist Wo, which is the smallest beam diameter, to the point where the beam diameter has increased to $\sqrt{2}Wo.$ However, the illustrated structure may not be user friendly because of an 8-9 lens system making the structure cumbersome and cost associated with manufacturing of numerous lenses.

It should be understood that the optical isolator of FIG. 2 can be replaced by any optical component configured to emit coherent light with a non-circular cross-section. Also, system 100 of FIG. 2 is equally effective with a source different from the fiber core.

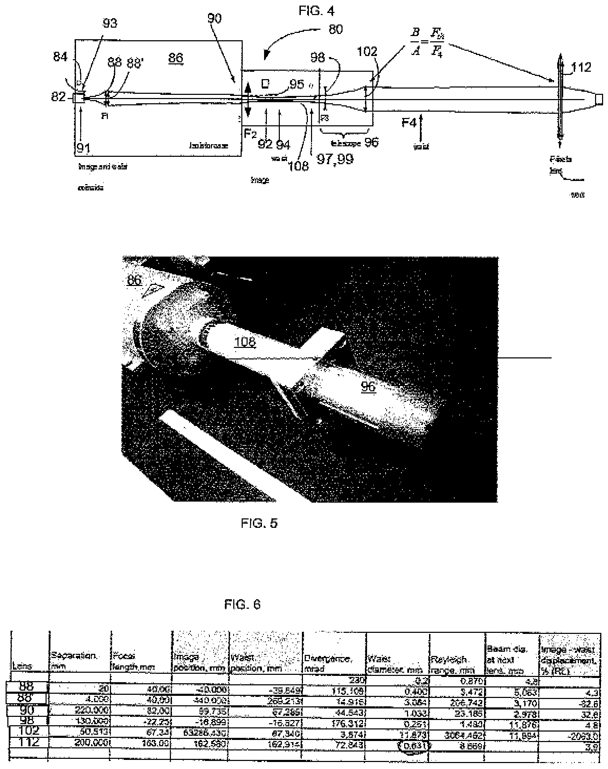

FIGs. 4 - 6 illustrate a further embodiment of an imaging system specifically configured to form a non-circular image of a likewise shaped light source with the desired intensity. FIG. 5 illustrates an experimental device based on the schematic of FIG. 4. FIG. 6 illustrates calculated results.

The illustrated configuration includes a pigtailed isolator with a housing 86 enclosing a collimating unit, a telescope assembly 96, F-theta lens 112 and insert 108. The opposite ends of insert 108 are removably mounted to respective housing 86 and telescope assembly 106.

The downstream end of delivery fiber 82 is received in a coupler, which is mounted to housing 86 and emits, for example, a non-circular beam having divergence of 230 mrad with a waist diameter of 0.2 mm and RR of 0.870 (See FIG. 6). The housing 86 of isolator 80 encloses a first positive lens 88 receiving light from a fiber 82 and configured to collimate it. The lens 88 is spaced from the downstream end of fiber 82 at a distance smaller than the focal length of this lens, for example adjacent lenses 88 and 88', spaced apart for example at 4 mm, the focal length 40 mm operating as a single lens with a focal length of 20, as can be seen from the table of FIG. 6, and smaller than the focal length, which is about 40 mm. Such a configuration places image 91 of the fiber's square core at the output end of fiber 82 focus within the narrowest region 84 of the emitted beam with a divergence 115, 109 mrad as shown in FIG. 4. In other words, waist 84 practically coincides with non-circular image 91 at the output of fiber 82.

The close position of upstream lenses 88 and 88' theoretically forms a collimated beam, but, in reality, the beam is slightly focused so that a waist 95 shown in dash lines is formed at a distance corresponding to 269,213 mm. The non-circular initial image 94 is however formed at a distance from waist 95 at 440, 000 mm from lens 88' (FIG. 6). The lenses 88 and 88' can be configured as a single lens with a prominent curvature.

The displacement of the image and waist relative to one another at a predetermined distance, i.e., the distance sufficient to place the image in the desired 5% sub-region of the RR, is realized by providing insert 108 with a positive lens 90. The insert 108 has its opposite ends coupled to housing 86 and telescope 96, respectively so that new lens 90 occupies the same position as an upstream lens 92 of telescope 96 in the originally designed isolator. In this example, lens 90 is spaced from lens 88' at 220 mm, has a focal length of 40 mm and shapes the beam incident thereupon so that image 92 is formed at 59,736 mm, whereas waist 94 is removed from lens 90 at 67,286 mm.

The beam is further incident on negative lens 98 of telescope 96 which is spaced downstream from lens 90 at 130 mm and having -22, 25 mm focal length (FIG. 6). The lens 98 is configured to form imaginary image 97 and imaginary waist 99 practically in the same plane upstream from lens 98. In particular, as indicated in FIG. 6, imaginary image 97 is spaced from lens 98 at -16, 899 mm whereas waist 99 at -16,827 mm. The imaginary image 97 provides information about its size A which is different from the desired size B, and thus, should be adjusted and placed in the focal plane of F-theta lens 112. The working distance, in turn, is determined in accordance with equations 1 and 2, as disclosed above. In particular, knowing the focal length of F-theta lens Fth, and both imaginary and desired image sizes A and B, respectively, the focal length f4 of lens 102 is

determined as $F4 = \dfrac{FthA}{B}$.

With the determined focal length of lens 102, F-theta lens 112 can be displaced relative lens 102 so as to satisfy the A/B=F4/F5 relationship. Thus in order to receive the desired non-circular image in the focal plane of F-theta lens 112, an optical system should meet the following conditions. The first condition requires the formation of negative or imaginary non-circular image in a corresponding waist upstream from the output positive lens of the telescope. Under the second condition displacement of the system and a F-theta lens relative to one another should be such that the distance between the output telescope lens 102 and F-theta 112 lens is equal to a sum of their respective focal lengths. This embodiment, like the configuration of FIG. 3 may be packaged as a kit with insert 108, isolator 86 and telescope 96 (FIG. 5) used either together specifically for the formation of the desired square image or just the isolator/telescope configuration for circular cores.

**Claims**

1. An optical system (100) for forming a final image of a non-circular light source on a workpiece, wherein the final image has a desired non-circular cross-section and a desired size B, the optical system comprising:

   a combination of five lenses having first, second and third upstream lenses (58, 60, 62) and fourth and last, fifth downstream lenses (64, 66) sequentially spaced apart along a light path transmitting a beam (54) which is emitted by the light source along the path,
   wherein said last, fifth downstream lens (66) is an F-theta lens,
   the spaced three upstream lenses (58, 60, 62) being configured to form a preliminary non-circular image of the source upstream from the fourth downstream lens (64) with a size A different from the desired size B;
wherein the beam incident on the first upstream lens (58) is collimated and has a first waist (55) thereof downstream from the first upstream lens (58), the three upstream lenses (58,60, 62) being configured to form an initial non-circular image of the source upstream from the first waist (55),
wherein the second upstream lens (60) is spaced downstream from the first upstream lens (58), and the third upstream lens (62) is located between the second upstream lens (60) and the downstream lenses (64, 66), the three upstream lenses (58, 60, 62) being configured to form the preliminary image in a focal plane (F3) of the third upstream lens (62),
wherein the second upstream lens (60) is configured to transmit the beam incident thereon so as to form a second waist (57), the third upstream lens (62) being configured with a back focus (F3) coinciding with the second waist (57),
wherein the F-theta lens (66) is spaced downstream from the fourth downstream lens (64) so

that $\dfrac{F4}{Fth} = \dfrac{A}{B}$, with F4 and Fth being focal lengths of respective fourth downstream and F-theta lenses (64, 66), wherein the F-theta lens (66) converges the beam incident thereon so that the final image and a final waist of the converged beam substantially coincide with one another; and
wherein the final image is formed within a Rayleigh range of the converged beam and spaced from the final waist at a distance d1 not exceeding ± 5% of the Rayleigh range.

2. An optical system for forming a final image of a non-circular light source on a workpiece, wherein the final image has a desired non-circular cross-section and a desired size B, the optical system comprising:

   a combination of five lenses having first, second and third upstream lenses (88, 90, 98) and fourth and last, fifth downstream lenses (102, 112) sequentially spaced apart along a light path transmitting a beam which is emitted by the light source (82) along the path,
   wherein said last, fifth downstream lens (112) is an F-theta lens (112),
   the spaced three upstream lenses (88,90,98) being configured to form a preliminary non-circular image of the source upstream from the fourth downstream lens (102) with a size A different from the desired size B;
   wherein the beam incident on the first upstream lens (88) is diverging, wherein the second upstream positive lens (90) is spaced downstream from the first upstream lens (88), and the third negative upstream lens (98) is located between the second upstream lens (90) and the downstream lenses (102, 112),

wherein the first upstream lens (88) transmits the beam so that the beam has a first waist (95) located between the second upstream positive and the third negative upstream lenses (90, 98) and upstream from the preliminary image,

wherein the fourth downstream lens (102) is configured with a back focus coinciding with the preliminary image, the preliminary image being imaginary,

wherein the F-theta lens (112) is spaced downstream from the fourth downstream lens (102) so that $\frac{F4}{Fth} = \frac{A}{B}$, with F4 and Fth being focal lengths of respective fourth downstream and F-theta lenses (102, 112), wherein the F-theta lens (112) converges the beam incident thereon so that the final image and a final waist of the converged beam substantially coincide with one another; and

wherein the final image is formed within a Rayleigh range of the converged beam and spaced from the final waist at a distance d1 not exceeding ± 5% of the Rayleigh range.

3. The system of claim 2, wherein the third upstream lens (98) and downstream lenses (102, 112) form a telescope.

**Patentansprüche**

1. Optisches System (100) zum Bilden eines finalen Bildes einer unrunden Lichtquelle auf einem Werkstück, wobei das finale Bild einen unrunden Sollquerschnitt und eine Sollgröße B aufweist, wobei das optische System umfasst:

eine Kombination aus fünf Linsen mit einer ersten, einer zweiten und einer dritten, jeweils vorgeordneten Linse (58, 60, 62) und einer vierten und einer letzten, fünften, jeweils nachgeordneten Linse (64, 66), die sequentiell entlang eines Lichtwegs beabstandet sind und einen Strahl (54) transmittieren, der von der Lichtquelle entlang des Wegs emittiert wird,

wobei die letzte, fünfte, nachgeordnete Linse (66) eine F-Theta-Linse ist, wobei die beabstandeten drei vorgeordneten Linsen (58, 60, 62) dazu eingerichtet sind, in Strahlrichtung vor der vierten, nachgeordneten Linse (64) ein vorläufiges, unrundes Bild der Quelle mit einer Größe A zu bilden, welche von der Sollgröße B verschieden ist;

wobei der auf die erste, vorgeordnete Linse (58) einfallende Strahl parallel gerichtet ist und eine erste Taille (55) davon in Strahlrichtung nach der ersten, vorgeordneten Linse (58) aufweist, wobei die drei vorgeordneten Linsen (58, 60, 62) dazu eingerichtet sind, ein initiales unrundes Bild der Quelle in Strahlrichtung vor der ersten Taille (55) zu bilden,

wobei die zweite, vorgeordnete Linse (60) in Strahlrichtung nach der ersten, vorgeordneten Linse (58) zu dieser beabstandet ist und die dritte, vorgeordnete Linse (62) zwischen der zweiten, vorgeordneten Linse (60) und den nachgeordneten Linsen (64, 66) angeordnet ist, wobei die drei vorgeordneten Linsen (58, 60, 62) dazu eingerichtet sind, das vorläufige Bild in einer Brennebene (F3) der dritten, vorgeordneten Linse (62) zu bilden,

wobei die zweite, vorgeordnete Linse (60) dazu eingerichtet ist, den darauf einfallenden Strahl derart zu transmittieren, dass eine zweite Taille (57) gebildet wird, wobei die dritte, vorgeordnete Linse (62) mit einem hinteren Brennpunkt (F3) eingerichtet ist, der mit der zweiten Taille (57) zusammenfällt,

wobei die F-Theta-Linse (66) in Strahlrichtung derart nach der vierten, nachgeordneten Linse (64) zu dieser beabstandet ist, dass $\frac{F4}{Fth} = \frac{A}{B}$,

wobei F4 und Fth Brennweiten der vierten, nachgeordneten bzw. der F-Theta-Linse (64, 66) sind, wobei die F-Theta-Linse (66) den auf diese einfallenden Strahl derart bündelt, dass das finale Bild und eine finale Taille des gebündelten Strahls im Wesentlichen miteinander zusammenfallen; und

wobei das finale Bild innerhalb eines Rayleigh-Bereichs des gebündelten Strahls gebildet wird und von der finalen Taille um einen Abstand d1 von nicht mehr als ± 5 % des Rayleigh-Bereichs beabstandet ist.

2. Optisches System zum Bilden eines finalen Bildes einer unrunden Lichtquelle auf einem Werkstück, wobei das finale Bild einen unrunden Sollquerschnitt und eine Sollgröße B aufweist, wobei das optische System umfasst:

eine Kombination aus fünf Linsen mit einer ersten, einer zweiten und einer dritten, jeweils vorgeordneten Linse (88, 90, 98) und einer vierten und einer letzten, fünften, jeweils nachgeordneten Linse (102, 112), die sequentiell entlang eines Lichtwegs beabstandet sind und einen Strahl transmittieren, der von der Lichtquelle (82) entlang des Wegs emittiert wird, wobei die letzte, fünfte, nachgeordnete Linse (112) eine F-Theta-Linse (112) ist,

wobei die beabstandeten drei vorgeordneten Linsen (88, 90, 98) dazu eingerichtet sind, in Strahlrichtung vor der vierten, nachgeordneten Linse (102) ein vorläufiges, unrundes Bild der Quelle mit einer Größe A zu bilden, welche von der Sollgröße B verschieden ist;

wobei der auf die erste, vorgeordnete Linse (88) einfallende Strahl divergent ist, wobei die zweite, vorgeordnete, positive Linse (90) in Strahlrichtung nach der ersten, vorgeordneten Linse (88) von dieser beabstandet ist und die dritte, negative, vorgeordnete Linse (98) zwischen der zweiten, vorgeordneten Linse (90) und den nachgeordneten Linsen (102, 112) angeordnet ist,

wobei die erste, vorgeordnete Linse (88) den Strahl derart transmittiert, dass der Strahl eine erste Taille (95) zwischen der zweiten, vorgeordneten, positiven und der dritten, negativen, vorgeordneten Linse (90, 98) und in Strahlrichtung vor dem vorläufigen Bild aufweist,

wobei die vierte, nachgeordnete Linse (102) mit einem hinteren Brennpunkt eingerichtet ist, der mit dem vorläufigen Bild zusammenfällt, wobei das vorläufige Bild ein imaginäres Bild ist,

wobei die F-Theta-Linse (112) in Strahlrichtung derart nach der vierten, nachgeordneten Linse (102) zu dieser beabstandet ist, dass

$\dfrac{F4}{Fth} = \dfrac{A}{B}$, wobei F4 und Fth Brennweiten der vierten, nachgeordneten bzw. der F-Theta-Linse (102, 112) sind, wobei die F-Theta-Linse (112) den auf diese einfallenden Strahl derart bündelt, dass das finale Bild und eine finale Taille des gebündelten Strahls im Wesentlichen miteinander zusammenfallen; und

wobei das finale Bild innerhalb eines Rayleigh-Bereichs des gebündelten Strahls gebildet wird und von der finalen Taille um einen Abstand d1 von nicht mehr als ±5 % des Rayleigh-Bereichs beabstandet ist.

3. System nach Anspruch 2, wobei die dritte, vorgeordnete Linse (98) und die nachgeordneten Linsen (102, 112) ein Teleskop bilden.

**Revendications**

1. Système optique (100) pour la formation d'une image finale d'une source lumineuse non circulaire sur une pièce à usiner, dans lequel l'image finale a une section transversale non circulaire souhaitée et une taille B souhaitée, le système optique comprenant :

une combinaison de cinq lentilles ayant une première, deuxième et troisième lentille en amont (58, 60, 62) et une quatrième et dernière cinquième lentille en aval (64, 66) espacées séquentiellement les unes des autres le long d'un trajet lumineux transmettant un faisceau (54) qui est émis par la source lumineuse le long du trajet,

dans lequel ladite cinquième et dernière lentille en aval (66) est une lentille F-thêta, les trois lentilles en amont espacées (58, 60, 62) étant configurées pour former une image non circulaire préliminaire de la source en amont de la quatrième lentille en aval (64) avec une taille A différente de la taille souhaitée B ;

dans lequel le faisceau incident sur la première lentille en amont (58) est collimaté et a un premier étranglement (55) en aval de ce dernier à partir de la première lentille en amont (58), les trois lentilles en amont (58, 60, 62) étant configurées pour former une image initialement circulaire de la source en amont du premier étranglement (55),

dans lequel la seconde lentille en amont (60) est espacée en aval de la première lentille en amont (58), et la troisième lentille en amont (62) est situé entre la seconde lentille en amont (60) et les lentilles en aval (64, 66), les trois lentilles en amont (58, 60, 62) étant configurées pour former l'image préliminaire dans un plan focal (F3) de la troisième lentille en amont (62),

dans lequel la seconde lentille en amont (60) est configurée pour transmettre le faisceau incident sur cette dernière de manière à former un second étranglement (57), la troisième lentille en amont (62) étant configurée avec une rétro focalisation (F3) coïncidant avec le second étranglement (57),

dans lequel la lentille F-thêta (66) est basée en aval de la quatrième lentille en aval (64) de sorte

que $\dfrac{F4}{Fth} = \dfrac{A}{B}$, avec F4 et Fth étant des distances focales des quatre lentille respective en aval et F-thêta (64, 66), dans lequel la lentille F-thêta (66) fait converger le faisceau incident sur cette dernière de sorte que l'image finale et un étranglement final du faisceau convergé coïncident substantiellement l'un avec l'autre ; et

dans lequel l'image finale est formée avec une gamme de Rayleigh du faisceau convergé et espacée de l'étranglement final à une distance d1 n'excédant pas ± 5 % de la gamme de Rayleigh.

2. Système optique pour la formation d'une image finale d'une source lumineuse non circulaire sur une pièce à usiner, dans lequel l'image finale a une section transversale non circulaire souhaitée et une taille B souhaitée, le système optique comprenant :

une combinaison de cinq lentilles ayant une première, deuxième et troisième lentille en amont (88, 90, 98) et une quatrième et une cinquième et dernière lentille en aval (102, 112) espacées séquentiellement les unes des autres le long d'un trajet lumineux transmettant un faisceau qui est émis par la source lumineuse (82) le long du trajet, dans lequel ladite cinquième et dernière lentille en aval (112) est une lentille F-thêta (112),

les trois lentilles en amont espacées (88, 90, 92) étant configurées pour former une image non circulaire préliminaire de la source en amont de la quatrième lentille en aval (102) avec une taille A différente de la taille B souhaitée ;

dans lequel le faisceau incident sur la première lentille en amont (88) est divergent, dans lequel la seconde lentille positive en amont (90) est espacée en aval de la première lentille en amont (88), et la troisième lentille négative en amont (98) est située entre la seconde lentille en amont (90) et les lentilles en aval (102, 112),

dans lequel la première lentille en amont (88) transmet le faisceau de sorte que le faisceau ait un premier étranglement (95) situé entre la deuxième lentille positive en amont et la troisième lentille négative en amont (90, 98) et en amont de l'image préliminaire,

dans lequel la quatrième lentille en aval (102) est configurée avec une rétro focalisation coïncidant avec l'image préliminaire, l'image préliminaire étant imaginaire,

dans lequel la lentille F-thêta (112) est basée en aval de la quatrième lentille en aval (102) de

sorte que $\frac{F4}{Fth} = \frac{A}{B}$ avec F4 et Fth étant des distances focales des quatre lentilles respectives en aval et F-thêta (102, 112), dans lequel la lentille F-thêta (112) fait converger le faisceau incident sur cette dernière de sorte que l'image finale et un étranglement final du faisceau convergé coïncident substantiellement l'un avec l'autre ; et

dans lequel l'image finale est formée avec une gamme de Rayleigh du faisceau convergé et espacée de l'étranglement final à une distance d1 n'excédant pas ±5 % de la gamme de Rayleigh.

3. Système selon la revendication 2, dans lequel la troisième lentille en amont (98) et les lentilles en aval (102, 112) forment un télescope.

FIG. 1A
Prior Art

FIG. 1B
Prior Art

FIG. 1C

FIG. 1D
Prior Art

FIG. 2

FIG. 3

FIG. 4

$$\frac{B}{A} = \frac{F_b}{F_4}$$

FIG. 5

FIG. 6

| Lens | Separation, mm | Focal length, mm | Image position, mm | Waist position, mm | Divergence, mrad | Waist diameter, mm | Rayleigh range, mm | Beam dia. at next lens, mm | Image - waist displacement, % (RC) |
|---|---|---|---|---|---|---|---|---|---|
| | | | | | 230 | 0.3 | 0.870 | 4.9 | |
| 88 | 20 | 40.00 | -10.000 | -39.849 | 115.108 | 0.400 | 3.472 | 5.663 | -4.3 |
| 88' | 4.000 | 40.00 | -440.000 | 269.213 | 14.915 | 3.064 | 206.742 | 3.170 | -32.6 |
| 90 | 220.000 | 82.00 | 59.735 | 67.285 | 44.543 | 1.033 | 23.185 | 2.978 | 32.6 |
| 98 | 130.000 | -22.25 | -16.899 | -16.827 | 176.312 | 0.253 | 1.480 | 11.876 | 4.8 |
| 102 | 50.513 | 67.34 | 63286.430 | 67.340 | 3.874 | 11.873 | 3064.462 | 11.894 | -2053.0 |
| 112 | 200.000 | 163.00 | 162.580 | 162.914 | 72.843 | 0.631 | 8.869 | | 3.9 |

**EP 2 855 076 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0536951 A2
- US 2002138119 A1